# EUROPÄISCHE PATENTANMELDUNG

(11) **EP 1 950 494 A1**
(43) Veröffentlichungstag der Anmeldung: **30.07.2008**
(21) Anmeldenummer: 07001911.2
(22) Anmeldetag: 29.01.2007
(51) Int. Cl.: F23C 9/00, F23R 3/28, F23R 3/50, F23R 3/34

(54) **Brennkammer für eine Gasturbine**

(71) Anmelder: SIEMENS AKTIENGESELLSCHAFT, 80333 München (DE)
(72) Erfinder: Kaufmann, Peter, 47443 Moers (DE); Krebs, Werner, Dr., 45481 Mülheim an der Ruhr (DE)

(57) **Zusammenfassung**

Die Erfindung betrifft eine Brennkammer (6, 48, 72) für eine Gasturbine (2, 50, 70) mit mindestens einem ersten und einem zweiten Strahlträger (14, 16, 52), von denen zumindest einer zum Eindüsen eines Betriebgases derart in einen Brennraum (12) vorgesehen ist, dass in seiner Flammzone (34, 38, 68) gebildetes Abgas im Brennraum (12) in eine Mischzone (28) des ersten Strahlträgers (14) rezirkuliert. Um eine kompakte Brennkammer zu erreichen wird vorgeschlagen, dass die Strahlträger (14, 16, 52) so zueinander positioniert sind, dass Abgas aus einer Flammzone (34) des ersten Strahlträgers (14) unmittelbar in eine Mischzone (30, 66) des zweiten Strahlträgers (16, 52) einströmt.

## Beschreibung

Die Erfindung betrifft eine Brennkammer für eine Gasturbine mit mindestens einem ersten und einem zweiten Strahlträger, von denen zumindest einer zum Eindüsen eines Betriebsgases derart in einen Brennraum vorgesehen ist, dass in seiner Flammzone gebildetes Abgas im Brennraum in eine Mischzone des ersten Strahlträgers rezirkuliert.

Zum Erzielen einer ruhigen und stabilen Verbrennung in einer Gasturbine ist es bekannt, Betriebsgas in Form von Brenngas und Luft vorgemischt durch Strahlträger in einen Brennraum einzudüsen, wodurch eine sehr magere Verbrennung mit einem geringen Anfall von Schadstoffkomponenten, insbesondere NOₓ und CO, erzeugt werden kann. Solche auf vorgemischten Strahlflammen basierende Verbrennungssysteme bieten gegenüber drallstabilisierten Systemen den Vorteil, dass Wärmefreisetzungsschwankungen und damit Dichteschwankungen bzw. Druckschwankungen gering gehalten werden können. Eine instabile und laute Verbrennung kann vermieden werden. Durch eine geeignete Wahl des Strahlimpulses lassen sich kleinskalige Strömungsstrukturen erzeugen, die akustisch induzierte Wärmefreisetzungsfluktuationen dissipieren und somit Druckpulsationen, die typisch für drallstabilisierte Flammen sind, unterdrücken.

Eine Stabilisierung der Verbrennung bei gleichzeitigem Erzielen eines sehr hohen Wirkungsgrads und einer geringen Schadstoffproduktion kann hierbei durch eine sehr starke Verdünnung des Betriebsgases mit Verbrennungsabgasen erreicht werden. Anstelle einer sichtbaren Flammenfront findet eine nicht leuchtende Verbrennung statt, die auch als milde Verbrennung, farblose Verbrennung oder Volumenverbrennung bekannt ist. Ein hoher Volumenstrom von Abgas in die Verbrennungszone kann hierbei durch eine Rezirkulierung von Verbrennungsabgasen erreicht werden, die vorzugsweise brennraumintern erfolgt. Die rezirkulierten Verbrennungsabgase verdünnen das in den Brennraum eingebrachte Frischgas und bewirken außerdem eine hohe Vorwärmung des entstehenden Gasgemisches auf Temperaturen oberhalb einer Selbstentzündungstemperatur des Betriebsgases. Anstelle einer herkömmlichen Flammenfront wird eine großvolumige Flammzone erreicht, in deren Volumen eine annähernd gleichmäßige Verbrennung erfolgt.

Aus der DE 10 2005 008 421 A1 ist ein Brennraum für eine Gasturbine bekannt, in dem Abgas aus einer Verbrennung durch Rezirkulierung in eine Mischzone geführt wird und auf diese Weise eine Volumenverbrennung erreicht wird.

Generell wird eine Rezirkulierung erreicht, indem der Strömungsquerschnitt der Brennkammer um den Ausgang der Strahlträger sprunghaft erweitert ist, so dass eine Verbrennung in einem Raum stattfindet, dessen Querschnitt um ein Vielfaches den Austrittsquerschnitt des Strahlträgers überschreitet. Seitlich des Strahlträgerausgangs besteht somit genügend Raum, durch den das heiße Abgas entgegen der Strahlrichtung des Strahlträgers zurückströmen und so die Mischzone erreichen kann. Ein hierdurch erforderlicher großer Brennraumquerschnitt steht einem kompakten Design einer Gasturbine im Wege. Außerdem kann ein großer Brennraumquerschnitt zu einer hohen Verweildauer der Gase im Brennraum führen, was einer ungewünschten Stickoxidbildung Vorschub leistet.

Es ist eine Aufgabe der vorliegenden Erfindung, eine Brennkammer für eine Gasturbine anzugeben, die die Möglichkeit einer Volumenverbrennung durch rezirkuliertes Abgas in Verbindung mit einem kompakten Design erlaubt.

Diese Aufgabe wird durch eine Brennkammer der eingangs genannten Art gelöst, bei der die Strahlträger erfindungsgemäß so zueinander positioniert sind, dass Abgas aus einer Flammzone des ersten Strahlträgers unmittelbar in eine Mischzone des zweiten Strahlträgers einströmt. Das Abgas aus der Flammzone des ersten Strahlträgers kann hierdurch unmittelbar zur Stabilisierung der Verbrennung des Betriebsgases aus dem zweiten Strahlträger eingesetzt werden, ohne dass eine Rezirkulierung dieses Abgases zum Erreichen der Mischzone des zweiten Strahlträgers erforderlich ist. Auf diese Weise kann die Flamme des zweiten Strahlträgers stabilisiert werden. Die Flamme des ersten Strahlträgers kann durch das rezirkulierte Abgas stabilisiert werden. Die Rezirkulierungszone kann klein gehalten werden, da lediglich Abgas für die Flamme des ersten Strahlträgers rezirkuliert werden muss. Auf eine Rezirkulierung von Abgas für die Flamme des zweiten Strahlträgers kann verzichtet werden.

Unter einem unmittelbaren Einströmen in die Mischzone des zweiten Strahlträgers wird in diesem Zusammenhang verstanden, dass das Abgas ohne eine Rezirkulierung aus der Flammzone des ersten Strahlträgers in die Mischzone des zweiten Strahlträgers einströmt. Das Abgas aus der Flammzone des ersten Strahlträgers kann Abgas sein, das dort durch Verbrennung gebildet wurde.

Zum Ermöglichen eines unmittelbaren Einströmens des Abgases aus der ersten Flammzone in die zweite Mischzone ohne eine externe Abgasführung ist der erste Strahlträger zweckmäßigerweise in der Brennkammer stromaufwärts des zweiten Strahlträgers angeordnet. Mit gleichem Vorteil ist die Flammzone des ersten Strahlträgers zweckmäßigerweise in der Brennkammer stromaufwärts der Mischzone des zweiten Strahlträgers angeordnet.

Zum Vermeiden von ungewünschten thermoakustischen Effekten bilden die Strahlträger vorteilhafterweise einen Strahlbrenner. Dieser kann durch im Wesentlichen verwirbelungsfreies Einstrahlen des Betriebsgases in den Brennraum gekennzeichnet sein. Zur Erzeugung einer homogenen und mageren Verbrennung sind die Strahlträger vorteilhafterweise zum Eindüsen eines vorgemischten Betriebsgases vorgesehen, also eines vor der Eindüsung gemischten Gemisches, das insbesondere gasförmigen Brennstoff und Oxidans, insbesondere Luft, umfasst. Eine Durchmischung des Betriebsgases findet daher nicht im Brennraum, sondern innerhalb der Strahlträger oder vor den Strahlträgern statt. Die Durchmischung kann teilweise oder idealerweise vollständig sein. Auch eine Ummantelung eines Gemisches mit Luft ist denkbar, z.B. in der Form, dass die innersten 15% bis 85% der Querschnittsfläche des Betriebsgasstrahls vom Betriebsgas durchströmt werden und der außen herum verbleibende Rest der Querschnittsfläche von Luft.

In einer weiteren Ausgestaltung der Erfindung bilden mehrere erste Strahlträger eine ringförmige erste Stufe und mehrere zweite Strahlträger eine ringförmige, weiter stromabwärts und radial außerhalb der ersten Stufe angeordnete zweite Stufe. Es kann ein radial innen liegender Rezirkulierungsraum gebildet werden, aus dem heraus das Abgas stabil und symmetrisch zu den Mischzonen der Strahlträger der ersten Zone geführt wird. Der Gasstrom kann im weiteren Verlauf, ohne wesentlich abgelenkt werden zu müssen, unter Beibehaltung der ringförmigen Symmetrie aus den Flammzonen der ersten Strahlträger in die Mischzonen der zweiten Strahlträger der zweiten Stufe geführt werden. Die Anzahl der Strahlträger pro Stufe liegt zweckmäßigerweise zwischen 5 und 40, wobei ein vorteilhaftes Verhältnis zwischen guter Verbrennung und Aufwand für Strahlträger bei 12 bis 16 Strahlträgern liegt.

Um eine gute Durchmischung des aus den zweiten Strahlträgern eingestrahlten Betriebsgases mit dem Abgas aus den Flammzonen der ersten Strahlträger zu erreichen, ist es vorteilhaft, wenn zumindest ein Strahlträger der ersten Stufe tangential versetzt zwischen zwei Stahlträgern der zweiten Stufe angeordnet ist. Das Abgas aus der Flammzone des ersten Strahlträgers kann zwischen zwei Strahlen aus den beiden zweiten Strahlträgern einströmen und sich somit gut mit diesen Strahlen vermischen. Ein direktes Aufeinanderprallen eines Abgasstroms aus der ersten Stufe mit einem Betriebsgasstrom aus der zweiten Stufe und damit eine Art Abprallen der Gase voneinander kann gering gehalten werden. Zweckmäßigerweise sind sämtliche Strahlträger der ersten Stufe tangential versetzt zu Strahlträgern der zweiten Stufe, und insbesondere in Tangentialrichtung abwechselnd angeordnet, so dass das Abgas aus den Flammzonen der ersten Strahlträger grundsätzlich zwischen Strahlen der zweiten Strahlträger einströmen kann.

In einer weiteren Ausgestaltung der Erfindung ist der erste Strahlträger in einem Winkel von 5° bis 30° radial zum zweiten Strahlträger gerichtet. Das Abgas aus der Flammzone des ersten Strahlträgers kann so direkt auf die Mischzone des zweiten Strahlträgers ausgerichtet werden, so dass dort eine gute Durchmischung des insbesondere vorgemischten Betriebsgases mit dem Abgas stattfindet. Vorteilhafterweise ist ein Winkel zwischen 10° und 20° gewählt, so dass einerseits die Bauform des Brennraums besonders kompakt sein kann und andererseits Turbulenzen bei einem zu steilen Zusammentreffen der Abgase mit dem Betriebsgas gering gehalten werden können.

Der Winkel des ersten Strahlträgers entspricht zweckmäßigerweise dem Winkel des aus dem ersten Strahlträger austretenden Gasstrahls. Der erste Strahlträger kann hierbei bezüglich der Brennerachse radial nach außen in Richtung zum zweiten Strahlträger oder einer zweiten Stufe ausgerichtet sein. Ebenso möglich ist es, dass der zweite Strahlträger bzw. Strahlträger einer zweiten Stufe bezüglich der Brennerachse radial nach innen ausgerichtet sind und der erste Strahlträger bzw. die Strahlträger einer ersten Stufe beispielsweise koaxial zur Brennerachse ausgerichtet sind. Des Weiteren sind drei Strahlträger bzw. drei Stufen denkbar, wobei der zweite Strahlträger beispielsweise koaxial, der erste Strahlträger radial nach außen und der dritte Strahlträger radial nach innen gerichtet ist, jeweils mit Bezug zur Brennerachse.

Um eine gute Durchmischung von Abgas aus der Flammzone des ersten Strahlträgers mit Betriebsgas aus dem zweiten Strahlträger zu erreichen, ist es vorteilhaft, wenn das Abgas möglichst großflächig an den Betriebsgasstrahl herangeführt wird und diesen vorteilhafterweise sogar ein Stück weit umgreift. Ist ein Strahlträger zum Eindüsen eines Betriebsgasstrahls mit einem länglichen Strahlquerschnitt vorgesehen, so kann ein Abgasstrahl aus dem ersten Strahlträger besonders gut zwischen zwei Betriebsgasstrahlen zweier zweiter Strahlträger eingedüst werden. Ein zumindest teilweises Umgreifen der Betriebsgasstrahlen von heißem Abgas kann gefördert werden.

Hierbei ist die lange Achse des länglichen Strahlquerschnitts zweckmäßigerweise zumindest im Wesentlichen radial ausgerichtet beispielsweise in Richtung einer anderen Stufe. Der Querschnitt kann oval oder in einer anderen geeigneten, abgerundeten Form sein. Möglich ist es, den Abgasstrahlquerschnitt aus dem ersten Strahlträger länglich zu gestalten, so dass er besonders gut zwischen die Betriebsgasstrahlen der zweiten Strahlträger führbar ist. Ebenso ist denkbar, dass die zweiten Strahlträger zum Bilden eines im Querschnitt länglichen Betriebsgasstrahls ausgeführt sind, so dass ein, insbesondere ebenfalls im Querschnitt länglicher Abgasstrahl aus einem ersten Strahlträger besonders gut zwischen die Betriebsgasstrahlen der zweiten Strahlträger führbar ist.

Eine Durchmischung von Betriebsgas mit heißem Abgas kann weiter gefördert werden, wenn ein zu durchmischender Betriebsgasstrahl eine große Strahloberfläche aufweist. Hierzu kann zumindest ein Strahlträger mit einem Mittel zum Bilden einer im Strahlquerschnitt eingebuchtete Strahloberfläche versehen sein. Ebenso ist eine ausgebuchtete Strahloberfläche denkbar.

Bei einem Teillastbetrieb der Brennkammer kann es vorkommen, dass durch geringe Verbrennungstemperaturen der benötigte Anteil an rezirkulierten Abgasen gegenüber einem Grundlastbetrieb relativ gesehen hoch ist und durch eine verringerte Abgaserzeugung nicht genügend Abgas rezirkuliert und damit nicht genügend Wärme für eine Selbstzündung zur Verfügung steht. Diesem Nachteil kann in einer weiteren Ausführungsform der Erfindung begegnet werden durch ein zusätzliches Mittel zur Bildung einer Flammzone in einer Rezirkulierungszone. Das zusätzliche Mittel kann ein Pilotbrenner sein, beispielsweise ein Floxbrenner oder ein Drallbrenner.

Bei einem Teillastbetrieb kann außerdem das Problem auftreten, dass in der Flammzone des ersten Strahlträgers nicht genug heißes Abgas zur ausreichenden Stabilisierung der Flamme des zweiten Strahlträgers erzeugt wird. Dieser Problematik kann begegnet werden, wenn bei einem Teillastbetrieb das Verhältnis von durch die Strahlträger strömendem Brenngas so eingestellt wird, dass möglichst stets eine ausreichende Stabilisierung der zweiten Flammzone erreicht wird. Eine solche Brenngasaufteilung zwischen den beiden Strahlträgern kann durch ein System mit einer wie oben beschriebenen Brennkammer und einer Steuereinheit erreicht werden, die zu einer Steuerung einer Brenngasaufteilung zwischen den beiden Strahlträgern in Abhängigkeit von einer Last bzw. einem Lastbereich eines Betriebs der Gasturbine vorgesehen ist.

Vorteilhafterweise ist die Steuereinheit hierbei dazu vorgesehen, bei einem Teillastbetrieb der Gasturbine im Verhältnis zum zweiten Strahlträger mehr Betriebsgas durch den ersten Strahlträger zu leiten als in einem Grundlastbetrieb bzw. Volllastbetrieb. Es steht, bezogen auf eine Betriebsgasmenge aus dem zweiten Strahlträger, mehr Abgas aus der Flammzone des ersten Strahlträgers zur Verfügung, so dass die Flammzone des zweiten Strahlträgers trotz abgesenkter Leistung ausreichend stabilisiert wird. Die relative Reduzierung des Betriebsgasstroms durch den zweiten Strahlträger kann so weit geführt werden, dass der Betriebsgasstrom durch den zweiten Strahlträger zum Erliegen kommt, wohingegen der Betrieb des ersten Strahlträgers aufrechterhalten bleibt. Denkbar ist auch, dass eine erste Stufe mit einem hohen Betriebsgasstrom, eine zweite Stufe mit einem geringeren und eine weitere Stufe mit einem noch geringeren Betriebsgasstrom betrieben wird.

Die Erfindung ist außerdem gerichtet auf eine Gasturbine mit einer wie oben beschriebenen Brennkammer. Durch die Kombination von Rezirkulierung einerseits und direktem Einströmen von Abgas aus der Flammzone des ersten Strahlträgers in die Mischzone des zweiten Strahlträgers kann ein Rezirkulierungsraum klein gehalten und die Brennkammer kompakt ausgeführt werden, was besonders vorteilhaft bei einer Gasturbine Anwendung findet.

Die Erfindung wird anhand von Ausführungsbeispielen näher erläutert, die in den Zeichnungen dargestellt sind. Es zeigen:
- FIG 1: einen Ausschnitt aus einer Gasturbine mit einer Brennkammer in einem Längsschnitt entlang einer Wellenachse,
- FIG 2: eine alternative Brennkammer mit drei Stufen von Strahlträgern in einem Längsschnitt,
- FIG 3: eine weitere Brennkammer mit zwei Stufen von Strahlträgern, einem zusätzlichen Pilotbrenner und einer Steuereinheit zur Steuerung einer Betriebsgaszufuhr zu den beiden Stufen und
- FIG 4-7: vier schematische Darstellungen von Anordnungen von Strahlträgern zweier Stufen in einem Querschnitt.

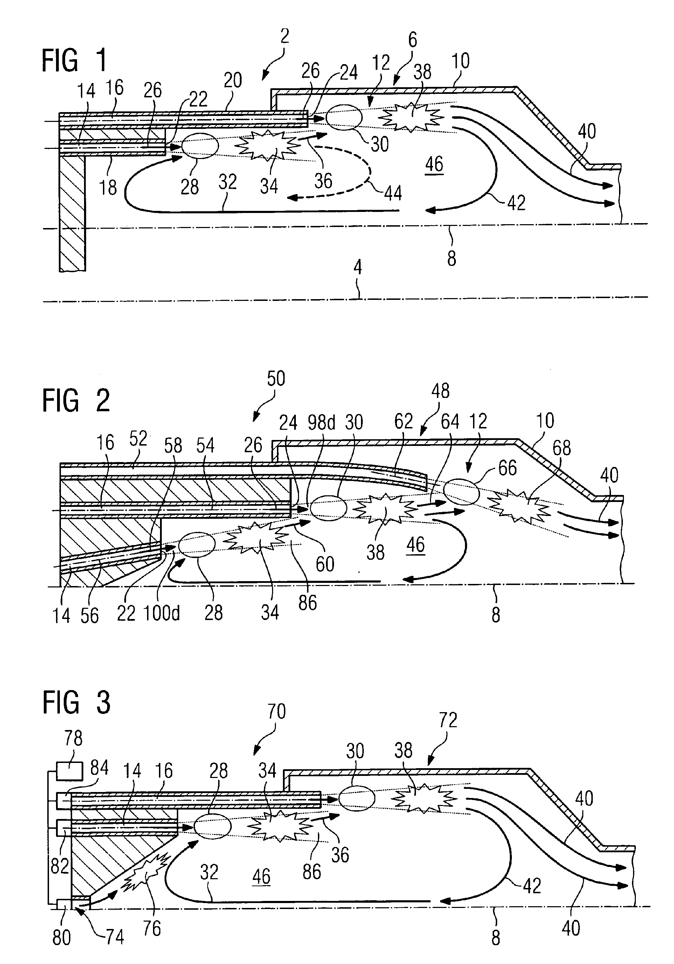

FIG 1 zeigt einen Ausschnitt aus einer Gasturbine 2 mit einer entlang einer Wellenachse 4 angeordneten und nicht dargestellten Welle und einer parallel zur Wellenachse 4 ausgerichteten Brennkammer 6 in einem Längsschnitt. Die Brennkammer 6 ist rotationssymmetrisch um eine Brennkammerachse 8 aufgebaut. Die Brennkammerachse 8 ist in diesem speziellen Ausführungsbeispiel parallel zur Wellenachse 4 angeordnet, wobei sie auch angewinkelt zur Wellenachse 4, im Extremfall senkrecht zu dieser verlaufen kann. Ein ringförmiges Gehäuse 10 der Brennkammer 6 umgibt einen Brennraum 12, der ebenfalls rotationssymmetrisch um die Brennkammerachse 8 ausgeführt ist.

In den Brennraum 12 münden ein erster Strahlträger 14 und ein zweiter Strahlträger 16, die zum Einstrahlen von vorgemischtem Betriebsgas, beispielsweise einer Mischung aus Brenngas und Luft, in den Brennraum 12 vorgesehen sind. Die Strahlträger 14, 16 umfassen jeweils ein Rohr 18, 20, durch das das Betriebsgas während eines Volllastbetriebs der Gasturbine 2 mit einer Geschwindigkeit von rund 150 m/s in den Brennraum 12 einströmt. Der erste Strahlträger 14 ist einer von 12 Strahlträgern 14, die ringförmig um die Brennkammerachse 8 angeordnet sind und zusammen eine erste Stufe eines Strahlbrenners bilden. Der zweite Strahlträger 16 ist ebenfalls einer von 12 im ringförmigen Verbund angeordneten Strahlträgern, die radial außerhalb der ersten Strahlträger 14 um die Brennkammerachse 8 angeordnet sind und eine zweite Stufe des Strahlbrenners bilden.

An Mündungen 22, 24 der Strahlträger 14, 16 ist der Brennraum 12 so geformt, dass er in einer Einströmrichtung 26 des Betriebsgases einen Querschnittssprung aufweist, durch den das Gas im Brennraum 12 seitlich an das aus den Mündungen 22, 24 austretende Betriebsgas anströmen und sich mit dem Betriebsgas in jeweils einer Mischzone 28, 30 vermischen kann.

Während eines Betriebs der Gasturbine 2 wird das vorgemischte Betriebsgas aus den beiden Strahlträgern 14, 16 in den Brennraum 12 eingedüst. Das Betriebsgas aus dem ersten Strahlträger 14 erreicht die erste Mischzone 28 und wird dort von rezirkuliertem Abgas eines Abgasstroms 32 umspült. Hierdurch wird das Betriebsgas in der Mischzone 28 mit dem sehr heißen Abgas gemischt, beispielsweise in einem Verhältnis von einem Teil Betriebsgas zu vier Teilen rezirkuliertem Abgas, so dass ein Gemisch aus Betriebsgas und Abgas erzeugt wird, dessen Temperatur oberhalb der Selbstzündtemperatur liegt. Das Gemisch entzündet sich in einer stromabwärts liegenden Flammzone 34, die in FIG 1 der Übersichtlichkeit halber getrennt von der Mischzone 28 dargestellt ist, in der Realität jedoch in diese übergeht. Es entsteht ein großvolumiger Flammenraum mit einer ruhigen Verbrennung.

In der Flammzone 34 gebildetes Abgas, also verbranntes Betriebsgas, erreicht durch seine Strömung in Strömungsrichtung 36 die zweite Mischzone 30, in der es sich mit dem aus dem zweiten Strahlträger 16 ausströmenden Betriebsgas mischt. Es entsteht wiederum ein zündfähiges Gemisch, das in einer analog zur ersten Flammzone 34 gebildeten zweiten Flammzone 38 verbrannt wird. Das in dieser Flammzone 38 entstehende und angesammelte Abgas verlässt den Brennraum 12 zum Teil in einem Abgasstrom 40, in dem das Abgas zu einem nicht dargestellten Turbinenteil der Gasturbine 2 geführt wird. Ein anderer Anteil wird in einem Rezirkulierungsstrom 42 zur Mischzone 28 rezirkuliert und dient dort bzw. in der Flammzone 34 zur Flammstabilisierung. Die Rezirkulierung wird unterhalten, indem das durch die Strahlträger 14 der ersten Stufe schnell einströmende brennbare Gasgemisch die heißen Abgase wegen der aus der hohen Austrittsgeschwindigkeit resultierenden statischen Druckdifferenz ansaugt.

Durch die Mischung wird eine Temperatur erreicht, die eine stabile Verbrennung in der Flammzone 34 ermöglicht. Je nach Ausrichtung der Abgase aus der Flammzone 34 werden diese Abgase vollständig zur Mischzone 30 geführt oder ein Teil davon in einem Rezirkulierungsstrom 44 ebenfalls zur Mischzone 28 rezirkuliert.

Durch das unmittelbare Einströmen des Abgases aus der ersten Flammzone 34 in Strömungsrichtung 36 in die Mischzone 30 kann dort eine Flammstabilisierung durch das heiße Abgas erreicht werden, ohne dass dieses Abgas rezirkuliert werden muss. Allgemein gesprochen wird durch die Verwendung der heißen Abgase einer Stufe zur Flammstabilisierung einer nachfolgenden Stufe der benötigte rezirkulierte Abgasmassenstrom gering gehalten. Gegenüber einer einstufigen Ausführung bei einem Volllastbetrieb wird nur ein Anteil von 20% bis 70%, beispielsweise 50% des durch die Strahlträger 14, 16 eingedüsten vorgemischten Betriebsgases durch rezirkulierte Abgase stabilisiert. Die axial stromab liegende zweite Stufe wird über die heißen Abgase der in Bezug zur Brennkammerachse 8 axial stromauf liegenden Stufe stabilisiert.

Rezirkuliert wird lediglich das Abgas, das zur Flammstabilisierung der ersten Stufe von Strahlträgern 14 benötigt wird.

Hierdurch kann eine Rezirkulierungszone 46 verhältnismäßig klein und die Brennkammer 6 bzw. die Gasturbine 2 kompakt ausgeführt werden. Durch die geringe Größe der Rezirkulierungszone 46 ist die durchschnittliche Verweildauer von Abgas im Brennraum 12 kurz und die Stickoxidbildung gering. Durch die Anordnung der Mischzone 28 und der Flammzone 34 stromaufwärts der Mischzone 30 des zweiten Strahlträgers 16 wird eine turbulenzarme Strahl-, Flamm- und Abgasführung im Brennraum 12 erreicht.

FIG 2 zeigt einen Ausschnitt aus einer Brennkammer 48 einer Gasturbine 50 mit einer Brennkammerachse 8, die senkrecht zu einer nicht dargestellten Wellenachse der Gasturbine 50 angeordnet ist. Die nachfolgende Beschreibung beschränkt sich im Wesentlichen auf die Unterschiede zum Ausführungsbeispiel aus FIG 1, auf das bezüglich gleichbleibender Merkmale und Funktionen verwiesen wird. Im Wesentlichen gleichbleibende Bauteile sind grundsätzlich mit den gleichen Bezugszeichen beziffert.

Zusätzlich zu ersten und zweiten Strahlträgern 14, 16 der ersten und zweiten Stufe umfasst die Brennkammer 48 ringförmig radial außerhalb der zweiten Stufe angeordnete Strahlträger 52, die eine symmetrisch um die Brennkammerachse 8 angeordnete dritte Stufe des Strahlbrenners bilden. Während eine Trägerachse 54 der zweiten Strahlträger 16 parallel zur Brennkammerachse 8 ausgerichtet ist und somit die Einströmrichtung 26 aus der Mündung 24 des zweiten Strahlträgers 16 ebenfalls im Wesentlichen parallel zur Brennkammerachse 8 verläuft, ist eine Trägerachse 56 des ersten Strahlträgers 14 um etwa 10° radial nach außen relativ zur Brennkammerachse 8 und zur zweiten Stufe hin verkippt. Auf diese Weise sind sämtliche Strahlträger 14 der ersten Stufe radial nach außen zur zweiten Stufe hin verkippt. Eine Einströmrichtung 58 und resultierend daraus eine Strömungsrichtung 60 des Abgases aus der Flammzone 34 ist direkt auf die zweiten Mischzonen 30 der zweiten Strahlträger 16 ausgerichtet zum direkten Einströmen des Abgases in die Mischzonen 30. Hierdurch wird eine besonders gute Durchmischung des Betriebsgases aus den zweiten Strahlträgern 16 mit dem heißen Abgas aus der Flammzone 34 erreicht.

In analoger Weise ist eine Trägerachse 62 der dritten Strahlträger 52 um 10° radial nach innen zur Brennkammerachse 8 gerichtet, so dass eine Strömungsrichtung 64 von Abgas aus der zweiten Flammzone 38 direkt auf eine Mischzone 66 der Strahlträger 52 der dritten Stufe gerichtet ist. Hierdurch kann eine Flammstabilisierung der Verbrennung in einer dritten Flammzone 68 ohne eine Rezirkulierung der Abgase erreicht werden.

Bei dieser dreistufigen Anordnung ist lediglich eine Rezirkulierung von heißem Abgas zur Flammstabilisierung der ersten Stufe notwendig, wohingegen die zweite und dritte Stufe ohne Rezirkulierung und durch unmittelbares Einströmen von heißem Abgas aus den stromaufwärts liegenden Stufen flammstabilisiert werden können. Die Rezirkulierungszone 46 kann hierdurch verhältnismäßig klein gehalten bleiben.

Zur weiteren Verbesserung der Flammstabilisierung bei kompakter Bauweise der Gasturbine ist es möglich, mehr als drei Stufen vorzusehen. Denkbar sind vier und auch fünf kaskadenartig hintereinander geschaltete Stufen, wobei nur das Abgas für die erste Stufe rezirkuliert wird und das Abgas zur Flammstabilisierung der nach nachfolgenden Stufen durch das direkt einströmende Abgas aus der vorhergehenden Stufe erfolgt.

FIG 3 zeigt ein weiteres Ausführungsbeispiel einer Gasturbine 70 mit einer Brennkammer 72 mit zweistufig angeordneten Strahlbrennern 14, 16. Im Unterschied zu dem in FIG 1 dargestellten Ausführungsbeispiel umfasst die Brennkammer 72 ein Mittel 74 zur Bildung einer Flammzone 76 in der Rezirkulierungszone 46. Bei einem Teillastbetrieb der Gasturbine 70, bei dem nur verhältnismäßig geringe Mengen an heißem Abgas erzeugt werden, kann hierdurch der Abgasstrom 32 durch einen zusätzlichen Wärmeeintrag bzw. Abgaseintrag aus der Flammzone 76 gestärkt werden. Auf diese Weise steht auch bei einem Teillastbetrieb genügend heißes Abgas zur Flammstabilisierung der ersten Stufe zur Verfügung.

Eine Steuereinheit 78 regelt hierbei in Verbindung mit einem steuerbaren Ventil 80 einen Betriebsgasstrom durch das Mittel 74, das als Pilotbrenner ausgeführt sein kann. Ist eine Pilotierung - beispielsweise bei einem Volllastbetrieb - nicht notwendig, so kann die Betriebsgaszufuhr aus dem Mittel 74 mit Hilfe des Ventils 80 abgeschaltet werden. Durch nicht dargestellte Mittel, beispielsweise Sensoren, werden Betriebsparameter in der Brennkammer 72 erfasst und bei einem Teillastbetrieb das Maß einer vorteilhaften Pilotierung durch die Steuereinheit 78 in Verbindung mit dem Ventil 80 ermittelt und eine entsprechende Betriebsgaszufuhr durch das Mittel 74 gesteuert.

Zur weiteren Verbesserung eines Teillastbetriebs umfasst die Gasturbine 70 weitere Ventile 82, 84 an den ersten bzw. zweiten Strahlträgern 14, 16. Hierdurch kann eine Betriebsgasaufteilung zwischen den beiden Stufen vorteilhaft gesteuert werden. So kann bei einem Teillastbetrieb die Betriebsgaszufuhr durch die zweite Stufe stärker gedrosselt werden als eine Betriebsgaszufuhr durch die erste Stufe, so dass die Zufuhr von heißen Gasen in einem Abgasstrahl 86 stets ausreichend für eine gute Flammstabilisierung der zweiten Stufe ist. Sollte durch eine weitere Verminderung der Last eine erhebliche Drosselung des Betriebsgasstroms der ersten Stufe notwendig sein, wird der Abgasstrom 32 durch die Pilotierung gestärkt, so dass eine ausreichende Abgas- und Wärmezufuhr zur Mischzone 28 und hierdurch mittelbar zur Mischzone 30 gewährleistet bleibt. Auf diese Weise kann eine Betriebsgaszufuhr durch die beiden Stufen in Abhängigkeit von einem Lastbereich der Gasturbine 80 gesteuert oder bei einem Vorhandensein von entsprechenden Sensoren geregelt werden. Dieses Prinzip gilt selbstverständlich auch für die Gasturbinen 2, 50 der vorangegangenen Ausführungsbeispiele.

Die FIGen 4 bis 7 zeigen Prinzipien zur Anordnung von Mündungen 88a-d, 90a-d von ersten inneren und zweiten äußeren Strahlträgern in einer schematischen Draufsicht. Diese Prinzipien sind auch auf andere Anzahlen oder Geometrien von Strahlträgern und mehr als zwei Stufen anwendbar. Die Mündungen 88a-d der ersten Strahlträger sind jeweils auf einem radial inneren Kreis 92a-d und die Mündungen 88a-d der zweiten Strahlträger auf einem radial äußeren Kreis 94a-d angeordnet.

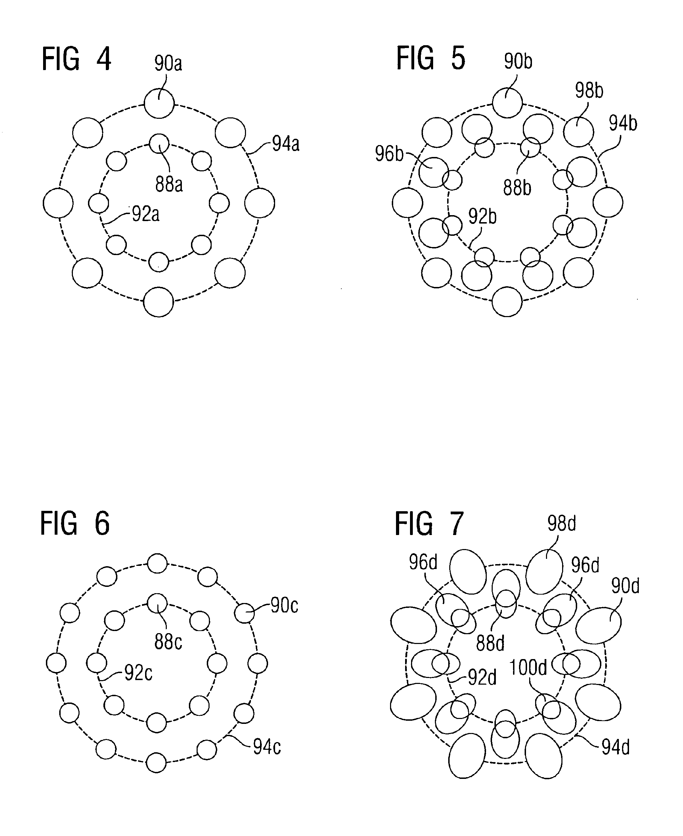

Bei dem in FIG 4 gezeigten Ausführungsbeispiel ist jeder inneren Mündung 88a der ersten Stufe eine äußere Mündung 90a der zweiten Stufe zugeordnet, so dass im Wesentlichen Abgas aus einem Strahlträger der ersten Stufe zu Flammstabilisierung eines Strahlträgers der zweiten Stufe dient.

In FIG 5 sind sie ersten Strahlträger deren Mündungen 88b jeweils tangential mittig zwischen zwei Strahlträgern bzw. deren Mündungen 90b versetzt angeordnet. Daraus resultierende Abgasstrahlen 96b der ersten Stufe greifen durch die tangentiale Versetzung zwischen Betriebsgasstrahlen 98b der zweiten Stufe. Hierdurch werden diese von den Abgasstrahlen 96b umgriffen, wodurch eine besonders gute Mischung des darin strömenden Betriebsgases mit heißem Abgas aus den Abgasstrahlen 96b erfolgt.

In FIG 6 sind die Mündungen 88c, 90c der beiden Stufen im Wesentlichen äquidistant angeordnet, so dass keine direkte Zuordnung der Mündungen 88c der ersten Stufe zu äußeren Mündung 90c der zweiten Stufe gegeben ist. Durch die ungleichmäßige tangentiale Anordnung der inneren Mündungen 88c zu den äußeren Mündungen 90c wird jedoch eine gute Durchmischung von Abgasstrahlen aus den inneren Strahlträgern mit den Betriebsgasstrahlen der äußeren Strahlträgern erreicht. Da mehr zweite Strahlträger vorhanden sind als erste Strahlträger können alle Strahlträger gleich groß ausfallen unter Beibehaltung gleichen Gasstroms pro Volumen Brenngasraum.

FIG 7 zeigt Mündungen 88d, 90d mit einem in Bezug zur Brennkammerachse 8 radial ausgerichtet länglichen Querschnitt, so dass die daraus strömenden Betriebsgasstrahlen 98d, 100d einen ebenso länglichen Strahlquerschnitt aufweisen. Aus Betriebsgasstrahlen 100d der ersten Strahlträger resultierende Abgasstrahlen 96d der ersten Stufe sind hierdurch analog oval geformt und greifen durch eine tangentiale Versetzung der Mündungen 88d, 90d zwischen die Betriebsgasstrahlen 98d. Hierdurch werden diese von den Abgasstrahlen 96d großflächig umgriffen, wodurch eine besonders gute Mischung des darin strömenden Betriebsgases mit heißem Abgas aus den Abgasstrahlen 96d erfolgt.

In einer weiteren Ausführungsform können nur die Mündungen einer Stufe, einer äußeren oder einer inneren Stufe, mit länglichen Querschnitten ausgeführt sein, so dass ein z.B. ovaler Abgasstrom durch runde Betriebsgasströme greift, oder ein runder Abgasstrom zwischen längliche Betriebsgasströme.

Ebenfalls denkbar ist es, dass Betriebsgasstrahlen mit eingebuchteten Strahloberflächen ausgestrahlt werden, wodurch eine Oberflächenvergrößerung erreicht wird und Abgas besonders gut in die Betriebsgasstrahlen eingreifen und sich dort gut durchmischen kann.

Die radiale Neigung von Strahlträgern 14, 16, 52 einer Stufe zu Strahlträgern 14, 16, 52 einer anderen Stufe ist selbstverständlich auch bei den in FIG 1 und 4 dargestellten Ausführungsbeispiele anwendbar. Ebenfalls ist das Prinzip der tangentialen Versetzung, der länglichen und/oder eingebuchteten Strahlquerschnitte und der Steuerung durch die Steuereinheit 78 in allen gezeigten Ausführungsbeispielen und bei weiteren Stufen anwendbar.

## Patentansprüche

1. Brennkammer (6, 48, 72) für eine Gasturbine (2, 50, 70) mit mindestens einem ersten und einem zweiten Strahlträger (14, 16, 52), von denen zumindest einer zum Eindüsen eines Betriebgases derart in einen Brennraum (12) vorgesehen ist, dass in seiner Flammzone (34, 38, 68) gebildetes Abgas im Brennraum (12) in eine Mischzone (28) des ersten Strahlträgers (14) rezirkuliert, **dadurch gekennzeichnet, dass** die Strahlträger (14, 16, 52) so zueinander positioniert sind, dass Abgas aus einer Flammzone (34) des ersten Strahlträgers (14) unmittelbar in eine Mischzone (30, 66) des zweiten Strahlträgers (16, 52) einströmt.

2. Brennkammer (6, 48, 72) nach Anspruch 1,
**dadurch gekennzeichnet, dass** der erste Strahlträger (14) in der Brennkammer (12) stromaufwärts des zweiten Strahlträgers (16, 52) angeordnet ist.

3. Brennkammer (6, 48, 72) nach Anspruch 1 oder 2,
**dadurch gekennzeichnet, dass** die Flammzone (34) des ersten Strahlträgers (14) in der Brennkammer (12) stromaufwärts der Mischzone (30, 66) des zweiten Strahlträgers (16, 52) angeordnet ist.

4. Brennkammer (6, 48, 72) nach einem der vorhergehenden Ansprüche, **dadurch gekennzeichnet, dass** die Strahlträger (14, 16, 52) einen Strahlbrenner bilden.

5. Brennkammer (6, 48, 72) nach einem der vorhergehenden Ansprüche, **dadurch gekennzeichnet, dass** die Strahlträger (14, 16, 52) zum Eindüsen eines vorgemischten Betriebsgases in Form eines Brennstoff-Luft-Gemisches vorgesehen sind.

6. Brennkammer (6, 48, 72) nach einem der vorhergehenden Ansprüche, **dadurch gekennzeichnet, dass** mehrere erste Strahlträger (14) eine ringförmige erste Stufe und mehrere zweite Strahlträger (16, 52) eine ringförmige, weiter stromabwärts und radial außerhalb der ersten Stufe angeordnete zweite Stufe bilden.

7. Brennkammer (6, 48, 72) nach Anspruch 6,
**dadurch gekennzeichnet, dass** zumindest ein Strahlträger (14) der ersten Stufe tangential versetzt zwischen zwei Strahlträgern (16, 52) der zweiten Stufe angeordnet ist.

8. Brennkammer (48) nach einem der vorhergehenden Ansprüche,
**dadurch gekennzeichnet, dass** der erste Strahlträger (14) in einem Winkel von 5° bis 30° radial zum zweiten Strahlträger 16, 52) gerichtet ist.

9. Brennkammer (6, 48, 72) nach einem der vorhergehenden Ansprüche, **dadurch gekennzeichnet, dass** ein Strahlträger (14, 16, 52) zum Eindüsen eines Betriebsgasstrahls (98d, 100d) mit einem länglichen Strahlquerschnitt vorgesehen ist.

10. Brennkammer (72) nach einem der vorhergehenden Ansprüche, **gekennzeichnet durch** einen zusätzliches Mittel (74) zur Bildung einer Flammzone (76) in einer Rezirkulierungszone (46).

11. System mit einer Brennkammer (72) nach einem der vorhergehenden Ansprüche und einer Steuereinheit (78), die zu einer Steuerung einer Betriebsgasaufteilung zwischen den beiden Strahlträgern (14, 16, 52) in Abhängigkeit von einem Lastbereich eines Betriebs der Gasturbine (70) vorgesehen ist.

12. System nach Anspruch 11,
**dadurch gekennzeichnet, dass** die Steuereinheit (78) dazu vorgesehen ist, bei einem Teillastbetrieb der Gasturbine (70) im Verhältnis zum zweiten Strahlträger (16, 52) mehr Betriebsgas durch den ersten Strahlträger (14) zu leiten als in einem Volllastbetrieb.

13. Gasturbine (2, 50, 70) mit einer Brennkammer (6, 48, 72) nach einem der vorhergehenden Ansprüche.
